# EUROPÄISCHE PATENTSCHRIFT

(11) **EP 3 138 683 B1**
(45) Veröffentlichungstag und Bekanntmachung des Hinweises auf die Patenterteilung: **02.09.2020**
(21) Anmeldenummer: 16178800.5
(22) Anmeldetag: 11.07.2016
(51) Int. Cl.: B29C 63/02

(54) **VERFAHREN ZUM UMMANTELN VON PROFILEN, DIE EINEN DICHTUNGSSTREIFEN AUFWEISEN**
METHOD FOR SHEATHING PROFILES COMPRISING A SEALING STRIP
PROCEDE DESTINE A ENVELOPPER DES PROFILES PRESENTANT UNE BANDE D'ETANCHEITE

(30) Priorität: 07.09.2015 DE 102015114941
(43) Veröffentlichungstag der Anmeldung: 08.03.2017
(73) Patentinhaber: Düspohl Maschinenbau GmbH, 33758 Schloss Holte-Stukenbrock (DE)
(72) Erfinder: Martens, Aleftin, 33415 Verl (DE)
(74) Vertreter: Ter Meer Steinmeister & Partner

(56) Entgegenhaltungen:
- WO-A1-2014/111353
- DE-A1-102005 048 835
- NL-C2- 1 002 287

## Beschreibung

Die Erfindung betrifft ein Verfahren zum Ummanteln von Profilen, die ein Tragprofil und einen daran gehaltenen Dichtungsstreifen aus einem verformbaren Material aufweisen, wobei ein Auflageteil des Dichtungsstreifens auf einer Auflagefläche des Tragprofils aufliegt und wobei der Auflageteil vorübergehend von der Auflagefläche abgehoben wird, um ein Dekormaterial, mit dem das Tragprofil ummantelt wird, gegen die Auflagefläche anzudrücken.

Beispiele für Profile, die in dieser Weise ummantelt werden, sind etwa Tür- und Fensterprofile, bei denen in einer Nut des Tragprofils ein Dichtungsstreifen aus gummielastischem Material gehalten ist. Aus fertigungstechnischen Gründen ist es oft erforderlich, dass der Dichtungsstreifen eingerollt oder einextrudiert wird, bevor das Tragprofil mit einem Dekormaterial ummantelt wird. Wenn jedoch das Dekormaterial nur bis an die Kante des Dichtungsstreifens heranreichen würde, so wäre ein unansehnlicher Saum sichtbar, sobald das Material des Dichtungsstreifens auch nur geringfügig zurückweicht. Es ist deshalb erwünscht, dass das Dekormaterial im Bereich der Auflagefläche unter den Auflageteil des Dichtungsstreifens greift. Bei dem Ummantelungsverfahren muss dann der Auflageteil vorübergehend angehoben werden, um die Auflagefläche freizulegen, gegen die dann das Dekormaterial angedrückt wird. Bei einem kontinuierlich auf einer Rollenbahn durchgeführten Ummantelungsverfahren erweist es sich jedoch als schwierig, die Rollen, die die nötige Verformung des Dichtungsstreifens und das Anrollen des Dekormaterials gegen die Auflagefläche bewirken sollen, auf engstem Raum an dem durchlaufenden Profil anzuordnen.

DE 10 2005 048 835 A1 und WO 2014 111353 A1 beschreiben Verfahren, bei denen der Dichtungstreifen erst nach der Ummantelung in eine Nut des Profils eingerollt wird.

Aufgabe der Erfindung ist es, ein Verfahren und eine Vorrichtung anzugeben, die eine einfachere und zuverlässigere Ausführung dieses Ummantelungsprozesses ermöglichen.

Diese Aufgabe wird erfindungsgemäß dadurch gelöst, dass das Anheben des Auflageteils und das Andrücken des Dekormaterials gegen die Auflagefläche mit einer einzigen Druckrolle erfolgt, die einen gegen den Dichtungsstreifen andrückenden Bund und einen in Axialrichtung der Druckrolle gegen die Auflagefläche vorgespannten Andruckring aufweist.

Der Andruckring rollt somit nicht mit seiner äußeren Umfangsfläche auf der Auflagefläche des Tragprofils ab, sondern reibt das Dekormaterial vielmehr mit einer Randzone seiner Stirnfläche gegen die Auflagefläche. Das erlaubt es, den Bund, der den Dichtungsstreifen von der Auflagefläche fernhält, und den Andruckring auf einer gemeinsamen Achse anzuordnen, so dass ihre wirksamen Umfangsbereiche in unmittelbarer Nähe zueinander liegen können. Dadurch wird ein zuverlässiger und störungsfreier Ummantelungsprozess ermöglicht. Ein weiterer Vorteil besteht darin, dass das Einrichten der Ummantelungsmaschine vereinfacht wird, da im Bereich der Auflagefläche des Tragprofils nur eine einzige Druckrolle geeignet positioniert zu werden braucht.

Vorteilhafte Ausgestaltungen und Weiterbildungen der Erfindung sind in den Unteransprüchen angegeben.

In einer vorteilhaften Ausführungsform wird die Druckrolle so gegen das Profil angestellt, dass ihre Achse nicht genau rechtwinklig zur Auflagefläche des Tragprofils verläuft, sondern geringfügig in Laufrichtung des Profils verkippt ist, so dass der Andruckring vornehmlich in der Zone auf das Dekormaterial und die Auflagefläche drückt, in der die Drehbewegung des Andruckringes eine in Bezug auf das Tragprofil einwärts gerichtete Komponente hat. Auf diese Weise wird der zunächst an der Kante des Tragprofils überstehende Lappen des Dekormaterials sauber und faltenfrei auf die Auflagefläche aufgerieben. Weiter stromabwärts, wo die Drehbewegung des Andruckrings eine in Bezug auf das Tragprofil auswärts gerichtete Komponente hat, ist dann der Andruckring bereits von der Auflagefläche und dem Dekormaterial abgehoben, so dass das Dekormaterial nicht wieder von der Auflagefläche weg geschoben wird.

Eine Druckrollenanordnung zur Durchführung des erfindungsgemäßen Verfahrens ist Gegenstand eines unabhängigen Vorrichtungsanspruchs.

In einer Ausführungsform ist der Bund axialfest an der Druckrolle ausgebildet, während der Andruckring in Axialrichtung relativ zu dem Bund verschiebbar ist.

Im folgenden wird ein Ausführungsbeispiel anhand der Zeichnung näher erläutert.

Es zeigen:
- Fig. 1: eine Querschnittsdarstellung eines Teils eines Fensterprofils, das nach dem erfindungsgemäßen Verfahren ummantelt wurde;
- Fig. 2: einen Schnitt durch das Profil gemäß Fig. 1 in verkleinertem Maßstab in einem Zustand unmittelbar vor einem abschließenden Schritt des Ummantelungsverfahrens;
- Fig. 3: eine Druckrollenanordnung einer Ummantelungsmaschine zusammen mit dem im Schnitt dargestellten Profil;
- Fig. 4: die Druckrollenanordnung und Teile des Profils in der Draufsicht; und
- Fig. 5: die Druckrollenanordnung zusammen mit einem Längsschnitt durch das Profil entsprechend der Linie V-V in Fig. 3.

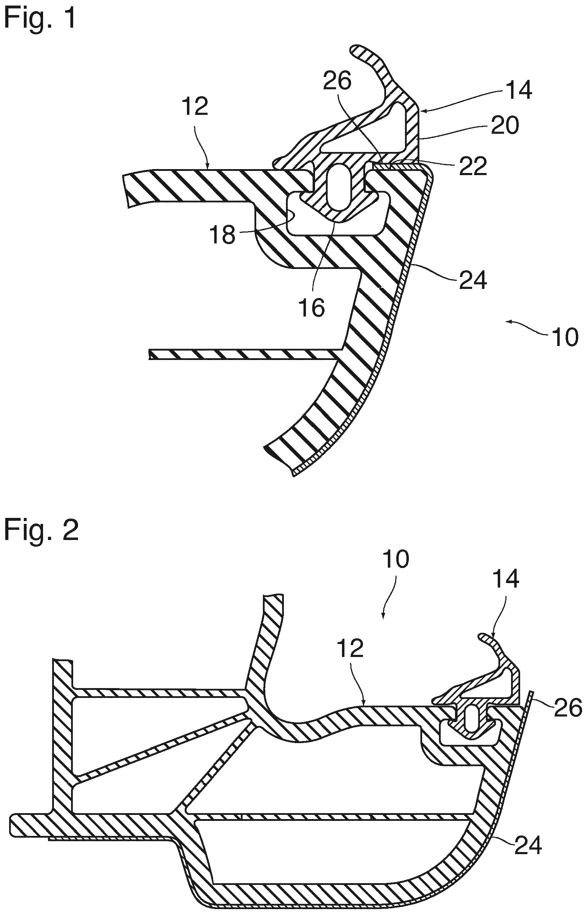

Fig. 1 zeigt einen Teil eines Fensterprofils 10, das ein Tragprofil 12 und einen Dichtungsstreifen 14 aus gummielastischem Material aufweist. Der Dichtungsstreifen 14 hat ein Harpunenstegprofil 16, mit dem er in der Nähe einer Kante des Tragprofils 12 in einer hinterschnittenen Nut 18 dieses Tragprofils gehalten ist. Auf der Außenseite des Harpunenstegprofils 16 bildet das Profil des Dichtungsstreifens 14 einen Auflageteil 20, der flächig auf einer Auflagefläche 22 des Tragprofils aufliegt.

Das Tragprofil 12 ist zumindest auf einem Teil seines Umfangs mit einem folienartigen Dekormaterial 24 ummantelt. Ein Randstreifen 26 dieses Dekormaterials ist um die Kante des Tragprofils, das die Auflagefläche 22 begrenzt, herumgelegt und liegt sandwichartig zwischen der Auflagefläche 22 und dem Auflageteil 20 des Dichtungsstreifens. Auf diese Weise ist sichergestellt, dass das Tragprofil auch im Bereich der Auflagefläche 22 vollständig durch das Dekormaterial 24 verkleidet ist, auch dann, wenn der elastische Dichtungsstreifen verformt wird und etwas weiter gegenüber der Kante des Tragprofils zurücktritt.

Fig. 2 zeigt einen etwas größeren Ausschnitt des Fensterprofils 10 in einem Zustand, in dem der Ummantelungsprozess noch nicht vollständig abgeschlossen ist und der Randstreifen 26 des Dekormaterials noch frei von der Kante des Tragprofils absteht. Es soll nun ein Verfahrensschritt beschrieben werden, mit der der Ummantelungsprozess abgeschlossen und somit der Randstreifen 26 aus dem in Fig. 2 gezeigten Zustand in den Zustand gemäß Fig. 1 überführt wird.

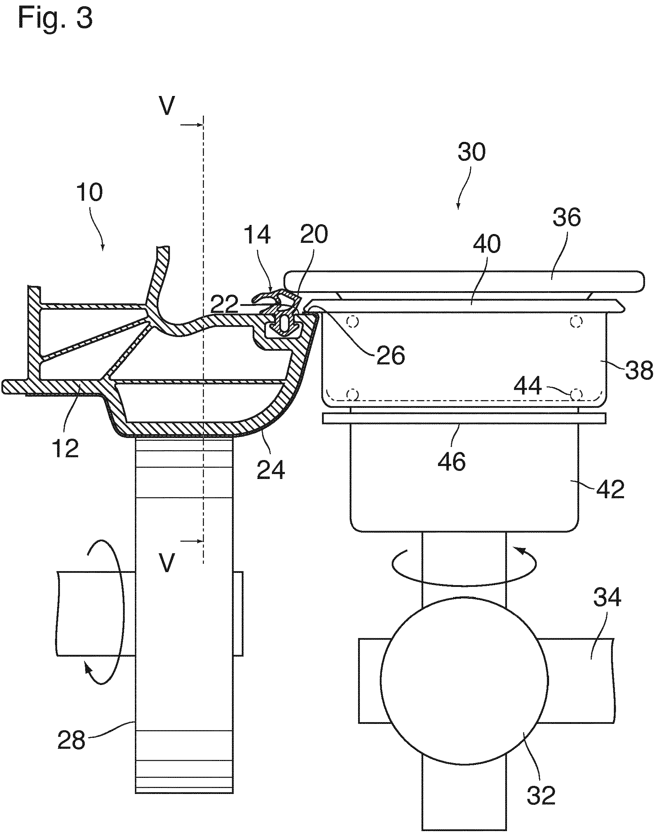

Fig. 3 zeigt das Fensterprofil 10 zusammen mit einer von mehreren Transport- und Andruckrollen 28 einer Ummantelungsmaschine. Mit den Transport- und Andruckrollen 28 wird das Fensterprofil abgestützt und geführt. Einige dieser Rollen sind drehangetrieben und bewirken einen Transport des Fensterprofils 10 in der Richtung senkrecht zur Zeichenebene in Fig. 3 (auf den Betrachter zu) durch die Ummantelungsmaschine. Andere dieser Rollen dienen in bekannter Weise dazu, das zuvor beleimte Dekormaterial 24 an die Umfangsfläche des Tragprofils 12 anzuwalzen.

Angrenzend an die Kante des Tragprofils, von der in Fig. 2 der Randstreifen 26 des Dekormaterials absteht, ist gemäß Fig. 3 eine Druckrolle 30 angeordnet, die dazu dient, den Randstreifen 26 unter den Dichtungsstreifen 14 zu schieben und so den Ummantelungsprozess zu vollenden. Die Druckrolle 30 ist drehbar in einer Kreuzmuffe 32 gelagert, die ihrerseits winkelverstellbar auf einer rechtwinklig zur Laufrichtung des Fensterprofils 10 verlaufenden Tragstange 34 der Ummantelungsmaschine gehalten ist.

An ihrem in Fig. 3 oberen Ende weist die Druckrolle 30 einen radial vorspringenden Bund 36 auf, der mit seinem äußeren Umfangsrand des Tragprofil 12 übergreift und so auf den Dichtungsstreifen 14 drückt, dass dieser umgeklappt und dadurch mit seinem Auflageteil 20 von der Auflagefläche 22 des Tragprofils abgehoben wird.

Die Druckrolle 30 weist weiterhin einen Andruckring 38 auf, der etwas unterhalb des Bundes 36 einen radial vorspringenden Kragen 40 bildet, der die Auflagefläche 22 nicht ganz so weit übergreift wie der Bund 36. Der Andruckring 38 ist drehfest und axial verschiebbar auf einem Kern 42 der Druckrolle 30 gehalten und nimmt im Inneren eine Feder 44 auf, die den Andruckring nach unten in Fig. 3 in Richtung auf einen Anschlag 46 vorspannt. Auf diese Weise wird die in Fig. 3 nach unten weisende Stirnfläche des Kragens 40 so gegen die Anlagefläche 22 des Tragprofils gedrückt, dass sie den Randstreifen 26 umbiegt und an die Anlagefläche 22 andrückt und mit dem Tragprofil verklebt. Zugleich können durch die axiale Beweglichkeit des Andruckrings 38 etwaige Maßtoleranzen des Tragprofils 12 ausgeglichen werden.

Ein Drehantrieb für die Druckrolle 30 kann beispielsweise durch den Reibschluss zwischen dem Dichtungsstreifen 14 und dem Umfangsrand des Bundes 36 gebildet werden.

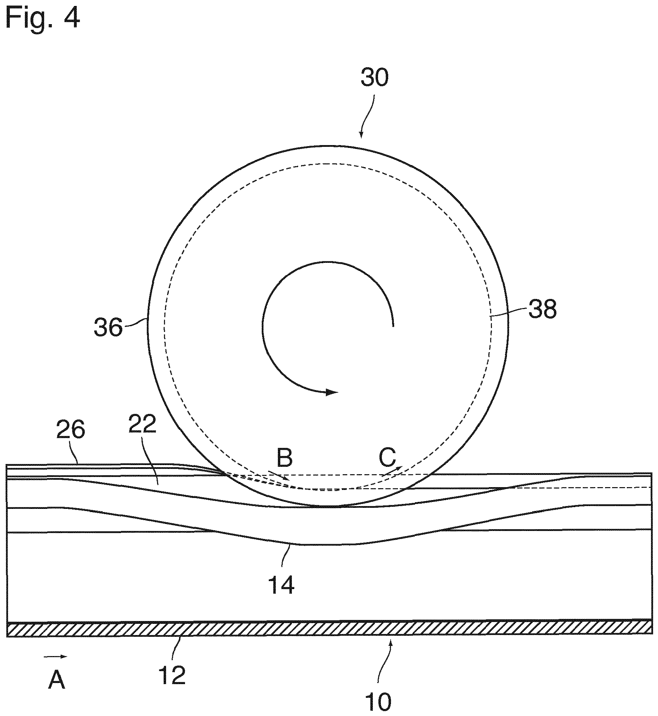

In Fig. 4 ist die Druckrolle 30 in der Draufsicht gezeigt. Das Fensterprofil 10 wird in Richtung des Pfeils A, nach rechts in Fig. 4, durch die Ummantelungsmaschine transportiert, so dass der Dichtungsstreifen 14 die Druckrolle 30 durch reibschlüssige Anlage an dem Bund 36 zu einer Drehung im Gegenuhrzeigersinn antreibt. In der Zone, in der der Bund 36 die Auflagefläche 22 des Tragprofils übergreift, wird dabei der Dichtungsstreifen umgebogen, so dass er die Auflagefläche 22 freilegt. Durch den in Fig. 4 gestrichelt eingezeichneten Kragen des Andruckrings 38 wird dann auch der Randstreifen 26 des Dekormaterials umgebogen und mit der Auflagefläche 22 verklebt. Stromabwärts der Druckrolle 30 federt dann der Dichtungsstreifen 14 elastisch zurück, so dass er sich mit seinem Auflageteil über den Randstreifen 26 des Dekormaterials legt.

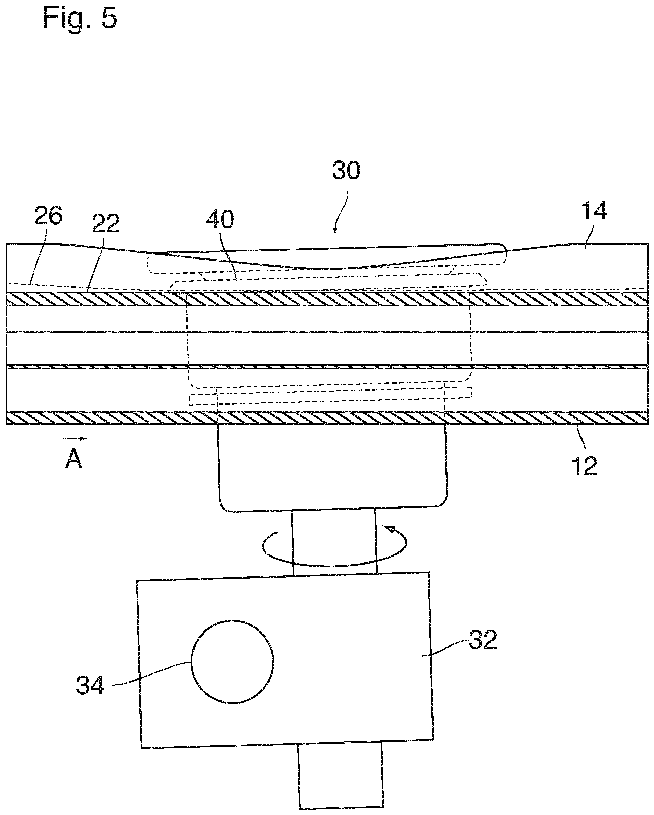

In Fig. 5 ist das Tragprofil 12 im Längsschnitt und die Druckrolle 30 in einer Seitenansicht mit Blickrichtung rechtwinklig zum Tragprofil gezeigt. Man erkennt hier, dass die Achse der Druckrolle 30 geringfügig in Laufrichtung des Tragprofils 12 verkippt ist. Der Randstreifen 26, der in Fig. 5 durch den Dichtungsstreifen 14 verdeckt und deshalb nur gestrichelt dargestellt ist, wird aufgrund dieser Verkippung nur durch den Teil des Kragens 40 umgebogen und gegen die Auflagefläche 22 angedrückt, der in Laufrichtung des Profils stromaufwärts der Position der Achse der Druckrolle 30 liegt (auf der linken Seite in Fig. 5). Hier bewegt sich der Kragen 40 in Fig. 5 auf den Betrachter zu, also einwärts in Bezug auf das Tragprofil 12, wie in Fig. 4 durch einen Pfeil B angedeutet wird. Dadurch wird der Randstreifen 26 sauber auf die Auflagefläche 22 "gekämmt".

Stromabwärts der Achse der Druckrolle bewegt sich der Kragen 40 in Bezug auf das Tragprofil nach außen, wie in Fig. 4 durch einen Pfeil C angegeben wird. Wenn in diesem Bereich noch ein Reibschluss zwischen dem Kragen 40 und dem Randstreifen 26 bestünde, würde deshalb der Randstreifen wieder vom Tragprofil weggezogen. Aufgrund der in Fig. 5 gezeigten Verkippung der Druckrolle ist jedoch hier der Kragen 40 bereits vom Randstreifen 26 abgehoben, so dass der Randstreifen des Dekormaterials auf der Auflagefläche 22 verbleibt.

## Patentansprüche

1. Verfahren zum Ummanteln von Profilen (10), die ein Tragprofil (12) und einen daran gehaltenen Dichtungsstreifen (14) aus verformbaren Material aufweisen, wobei ein Auflageteil (20) des Dichtungsstreifens auf einer Auflagefläche (22) des Tragprofils aufliegt und wobei der Auflageteil (20) vorübergehend von der Auflagefläche (22) abgehoben wird, um ein Dekormaterial (24), mit dem das Tragprofil ummantelt wird, gegen die Auflagefläche (22) anzudrücken, **dadurch gekennzeichnet, dass** das Anheben des Auflageteils (20) und das Andrücken des Dekormaterials (24) gegen die Auflagefläche (22) mit einer einzigen Druckrolle (30) erfolgt, die einen gegen den Dichtungsstreifen andrückenden Bund (36) und einen in Axialrichtung der Druckrolle gegen die Auflagefläche (22) vorgespannten Andruckring (38) aufweist.

2. Verfahren nach Anspruch 1, bei dem die Druckrolle (30) so an das Profil (10) angestellt wird, dass ihre Drehachse relativ zur Normalen auf die Anlagefläche (22) verkippt ist.

3. Verfahren nach Anspruch 2, bei dem die Drehachse der Druckrolle (30) in der Richtung parallel zur Laufrichtung des Profils (10) verkippt wird.

4. Druckrollenanordnung zur Ausführung des Verfahrens nach einem der Ansprüche 1 bis 3, **gekennzeichnet durch** eine Druckrolle (30) mit einem radial vorspringenden Bund (36) und einem mit dem Bund (36) mitdrehbaren Andruckring (38) mit einem Kragen (40), dessen Außendurchmesser kleiner ist als der des Bundes (36), und durch eine elastische Einrichtung (44) zum Vorspannen des Andruckrings (38) in der von dem Bund (36) weg weisenden axialen Richtung.

5. Druckrollenanordnung nach Anspruch 4, bei der der Bund (36) starr an der Druckrolle (30) ausgebildet ist und der Andruckring (38) axial relativ zu dem Bund (36) verschiebbar ist.

6. Druckrollenanordnung nach Anspruch 4 oder 5, bei der die Achse der Druckrolle (30) in Laufrichtung der Profile (10) relativ zu einer durch Transport- und Andruckrollen (28) definierten Laufbahn für die Profile verkippt ist.

7. Druckrollenanordnung nach Anspruch 6, bei der die Druckrolle (30) drehbar in einer Kreuzmuffe (32) gelagert ist, die winkelverstellbar auf einer rechtwinklig zur Drehachse der Druckrolle (30) und rechtwinklig zur Laufrichtung der Profile (10) verlaufenden Tragstange (34) gehalten ist.

## Claims

1. A method for sheathing profiles (10) having a support profile (12) and a sealing strip (14) held thereon and made of deformable material, wherein an engagement part (20) of the sealing strip rests on a support surface (22) of the support profile and wherein the engagement part (20) is temporarily lifted from the support surface (22) in order to press a decorative material (24), with which the support profile is sheathed, against the support surface (22), **characterized in that** the lifting of the support part (20) and the pressing of the decorative material (24) against the support surface (22) are achieved with a single pressure roller (30), which has a collar (36) pressing against the sealing strip, and a pressure ring (38) biased against the support surface (22) in the axial direction of the pressure roller.

2. The method according to claim 1, wherein the pressure roller (30) is placed against the profile (10) in such a way that its axis of rotation is tilted relative to the normal to the support surface (22).

3. The method according to claim 2, wherein the axis of rotation of the pressure roller (30) is tilted in the direction parallel to the running direction of the profile (10).

4. A pressure roller arrangement for carrying out the method according to one of claims 1 to 3, **characterized by** comprising: a pressure roller (30) with a radially projecting collar (36) and a pressure ring (38) which can be rotated together with the collar (36) the pressure ring having a rim (40), whose outer diameter is smaller than that of the collar (36); and an elastic device (44) for biasing the pressure ring (38) in the axial direction away from the collar (36).

5. The pressure roller arrangement according to claim 4, wherein the collar (36) is rigidly formed on the pressure roller (30) and the pressure ring (38) is axially displaceable relative to the collar (36).

6. The pressure roller arrangement according to claim 4 or 5, wherein the axis of the pressure roller (30) is tilted in the running direction of the profiles (10) relative to a raceway that is defined by transport and pressure rollers (28) for the profiles.

7. The pressure roller arrangement according to claim 6, wherein the pressure roller (30) is rotatably mounted in a cross sleeve (32) which is adjustable in angle on a support rod (34) that extends perpendicular to the axis of rotation of the pressure roller (30) and perpendicular to the running direction of the profiles (10).

## Revendications

1. Procédé destiné à envelopper des profilés (10) qui comportent un profilé de support (12) et une bande d'étanchéité (14) en matériau déformable maintenue sur celui-ci, dans lequel une partie d'appui (20) de la bande d'étanchéité repose sur une surface d'appui (22) du profilé de support et dans lequel la partie d'appui (20) est soulevée temporairement par la surface d'appui (22) afin de presser un matériau décoratif (24), dont le profilé de support est enveloppé, contre la surface d'appui (22), **caractérisé en ce que** le relèvement de la partie d'appui (20) et la pression du matériau décoratif (24) contre la surface d'appui (22) s'effectuent avec un seul galet presseur (30) qui comporte un épaulement (36) exerçant une pression contre la bande d'étanchéité et une couronne de pression (38) précontrainte contre la surface d'appui (22) dans une direction axiale du galet presseur.

2. Procédé selon la revendication 1, dans lequel le galet presseur (30) est appliqué sur le profilé (10) de sorte que son axe de rotation est incliné par rapport à la normale à la surface d'appui (22).

3. Procédé selon la revendication 2, dans lequel l'axe de rotation du galet presseur (30) est incliné dans la direction parallèle à la direction de déplacement du profilé (10).

4. Ensemble de galet presseur pour la mise en œuvre du procédé selon l'une des revendications 1 à 3, **caractérisé par** un galet presseur (30) ayant un épaulement (36) faisant radialement saillie et une couronne de pression (38) pouvant tourner conjointement avec l'épaulement (36), comportant une collerette (40) dont le diamètre extérieur est plus petit que celui de l'épaulement (36), et par un dispositif élastique (44) pour précon-traindre la couronne de pression (38) dans la direction axiale s'éloignant de l'épaulement (36).

5. Ensemble de galet presseur selon la revendication 4, dans lequel l'épaulement (36) est formé de manière fixe sur le galet presseur (30) et la couronne de pression (38) peut être déplacée axialement par rapport à l'épaulement (36).

6. Ensemble de galet presseur selon la revendication 4 ou 5, dans lequel l'axe du galet presseur (30) est incliné dans la direction de déplacement du profilé (10) par rapport à un trajet de roulement défini par des galets de transport et de pression (28) pour les profilés.

7. Ensemble de galet presseur selon la revendication 6, dans lequel le galet presseur (30) est monté de façon à pouvoir tourner dans un manchon en croix (32) qui est maintenu de manière angulairement réglable sur une tige de support (34) s'étendant orthogonalement à l'axe de rotation du galet presseur (30) et orthogonalement à la direction de déplacement du profilé (10).
